# EUROPÄISCHE PATENTANMELDUNG

(11) **EP 2 011 747 A2**
(43) Veröffentlichungstag der Anmeldung: **07.01.2009**
(21) Anmeldenummer: 08158773.5
(22) Anmeldetag: 23.06.2008
(51) Int. Cl.: B65G 1/04, B65G 1/137

(54) **Kombiniertes Warenlager**

(30) Priorität: 04.07.2007 DE 202007009399 U
(71) Anmelder: Gebr. Willach GmbH, 53809 Ruppichteroth (DE)
(72) Erfinder: Willach, Ulrich, 53819 Neunkirchen-Seelscheid (DE)
(74) Vertreter: Selting, Günther

(57) **Zusammenfassung**

Das Warenlager besteht aus einem Einzelplatzlagerautomaten (10) mit Einzelplätzen (12) für die zu lagernden Gegenstände, und einem Kanallagerautomaten (30), in welchem die Gegenstände in Kanälen (32) hintereinander gelagert werden. Beide Lager sind von einem gemeinsamen Lagerverwaltungsrechner gesteuert. Bei der Einlagerung von Waren werden diese einem Warenannahmeautomaten (40) zugeführt. Nach Identifizierung eines Gegenstandes wird entschieden, ob dieser in den Einzelplatzlagerautomaten (10) oder den Kanallagerautomaten (30) eingegeben werden soll. Entsprechend wird eine Weiche (42) betätigt, um den Gegenstand in eine Position (43,44) zu bringen, in der er von dem Manipulator (24,38) des betreffenden Lagers erreicht werden kann.

## Beschreibung

Die Erfindung betrifft ein Warenlager zum Lagern von Waren, insbesondere für Apotheken, in denen die Waren in quaderförmigen Packungen enthalten sind.

Bei automatischen Lagersystemen sind Einzelplatzlagerautomaten bekannt, wie sie beispielsweise in EP 1 407 984 B1 (Willach) beschrieben sind. Solche Einzelplatzlagerautomaten weisen zahlreiche Einzelplätze auf, an denen Waren bleibend gelagert werden können. Jeder Lagerplatz hat eine Adresse, so dass der Lagerplatz von einem Manipulator gesteuert angefahren werden kann, um die Ware dort abzulegen oder zu entnehmen. Der Manipulator ist in dem Einzelplatzlagerautomaten in mindestens drei Raumrichtungen bewegbar. Er ist im Stande, einen Gegenstand an einen Ausgabeförderer abzugeben.

Ein anderer Lagertyp ist der Kanallagerautomat. Ein Kanallagerautomat ist beschrieben in EP 0 991 037 B1 (Willach). Der Kanallagerautomat hat Lagerkanäle, in denen Gegenstände in einer Reihe angeordnet sind, beispielsweise auf Schrägfachböden, in vertikalen Schächten oder unter Federspannung. Wird am Entnahmeende des Kanals ein Gegenstand entnommen, so rutschen die übrigen in dem Kanal enthaltenen Gegenstände nach. Die Gegenstände sind also seriell angeordnet. Das Entnehmen von Gegenständen ist in kurzer Zeit möglich, jedoch dürfen normalerweise in einem Kanal nur Gegenstände derselben Art enthalten sein. Als Folge hiervon ergibt sich in einem Kanallagerautomaten manchmal ungenutzter Leerraum. Der Kanallagerautomat ist besonders geeignet für häufig verlangte Waren (Schnelldreher), während der Einzelplatzlagerautomat generell für alle Waren geeignet ist, jedoch längere Bringzeiten hat.

In EP 1 409 376 B1 (Beils et al.) ist ein kombiniertes Warenlager beschrieben, welches ein Einlagerungsmodul und ein Identifizierungsmodul aufweist. Für die Speicherung der Waren sind Regalmodule unterschiedlichen Typs vorgesehen. Ein erster Regaltyp für Schnelldreher weist geneigte Lagerschächte für die Aufnahme von mehreren untereinander gleichartigen Produkten auf. Ein Manipulator ist für die Einlagerung von Produkten in jeden der Regaltypen vorgesehen. Die Lagerregale vom Schachttyp haben für die Warenausgabe jeweils einen eigenen Manipulator. Während der Einlagerung von Waren ist eine Warenausgabe aus dem Regallager des anderen Typs nicht möglich, wodurch Verzögerungen bei der Warenausgabe auftreten können.

Der Erfindung liegt die Aufgabe zugrunde, einen Warenlagerautomaten zu schaffen, der die Vorteile beider Lagertypen vereinigt.

Das kombinierte Warenlager nach der vorliegenden Erfindung ist durch den Anspruch 1 bezeichnet. Es weist einen kompletten Einzelplatzlagerautomaten und einen kompletten Kanallagerautomaten auf, die durch einen Warenannahmeautomaten verbunden sind.

Die Erfindung sieht komplette Lagerautomaten vor, die von einem Warenannahmeautomaten bedient werden. Jeder der Lagerautomaten arbeitet unabhängig von den übrigen Lagerautomaten, so dass keine Verzögerungen durch Wartezeiten auftreten. Ferner können Waren von dem Kanallagerautomaten in den Einzelplatzlagerautomaten umgesetzt werden und umgekehrt.

Die Erfindung ermöglicht es, ein automatisches Warenlager mit insgesamt kurzer Bringzeit auszustatten, wobei Waren, die häufiger verlangt werden, in dem Kanallagerautomaten untergebracht werden, während Waren, die seltener verlangt werden, in dem Einzelplatzlagerautomaten untergebracht werden. Beide Lager können auf dieselbe Ausgabevorrichtung arbeiten, so dass der Benutzer nicht merkt, aus welchem Lager die Ware entnommen wurde. Bei der Einlagerung wird die Ware bzw. ihre Verpackung mit einem Sensor oder Scanner abgetastet, um anhand eines angebrachten Barcodes die Art des Produkts zu erkennen. Die Größenabmessungen (Länge, Breite, Höhe) des Gegenstandes sind zugehörig zum Barcode gespeichert, oder werden im Warenannahmeautomaten gemessen. Der gemeinsame Lagerverwaltungsrechner wählt einen Lagerplatz geeigneter Größe im Kanallagerautomaten oder im Einzelplatzlagerautomaten aus. Bei der Auswahl des Lagerplatzes wird die Häufigkeit der Anforderung dieses Produktes berücksichtigt. Die Erfindung bietet den Vorteil, dass der Benutzer beim Einlagern von Waren nicht zwischen den Lagern unterschiedlichen Typs unterscheiden muss. Vielmehr nimmt diese Aufteilung der gemeinsame Lagerverwaltungsrechner vor. Der Benutzer braucht die Gegenstände lediglich auf ein Förderband oder in einen Trichter zu geben. Nachfolgend werden die Gegenstände automatisch identifiziert anhand eines Barcodes oder eines anderweitigen Unterscheidungsmerkmals, und dann entweder dem Kanallagerautomaten oder dem Einzelplatzlagerautomaten zugeführt. Das Einlagern erfolgt vollautomatisch mit Hilfe der in den Lagerautomaten enthaltenen Manipulatoren. Der Warenannahmeautomat kann auch so ausgebildet sein, dass er Gegenstände zwischen dem Einzelplatzlagerautomaten und dem Kanallagerautomaten überführt, d.h. von einem Lager in das andere transferiert. Damit ist eine Umlagerung von Gegenständen möglich.

Gemäß einer bevorzugten Ausführungsform der Erfindung weist der Kanallagerautomat einen ersten Manipulator auf, der zur Entnahme von Gegenständen entlang der Frontseite der Kanäle gesteuert bewegbar ist, und einen zweiten Manipulator, der zum Einlagern von Gegenständen entlang der Rückseite der Kanäle gesteuert bewegbar ist, wobei der zweite Manipulator mit dem Warenannahmeautomaten zusammenwirkt. Der zweite Manipulator kann Waren von dem Warenannahmeautomaten übernehmen, um sie in den Kanallagerautomaten einzulagern.

Der Einzelplatzlagerautomat und der Kanallagerautomat sind vorzugsweise mit demselben Förderer verbunden, um Gegenstände an diesen abzugeben. Sowohl beim Einlagern als auch beim Ausgeben von Gegenständen aus dem kombinierten Warenlager bemerkt der Benutzer nicht die interne Unterteilung in Einzelplatzlagerautomat und Kanallagerautomat.

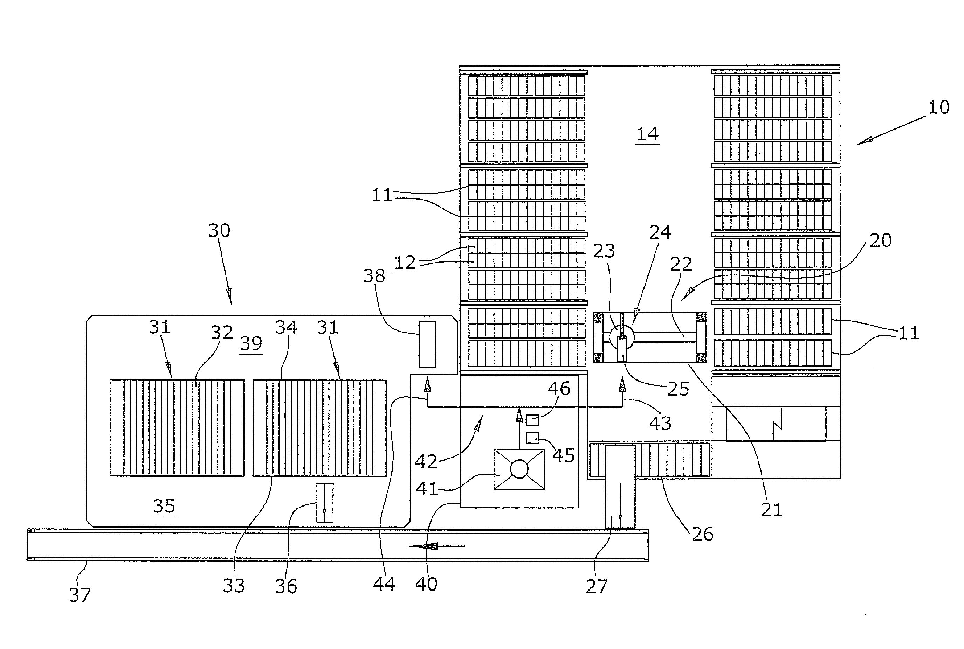

Im Folgenden wird unter Bezugnahme auf die einzige Figur der Zeichnung ein Ausführungsbeispiel der Erfindung näher erläutert.

Die Zeichnung zeigt schematisch eine Draufsicht auf ein kombiniertes Warenlager.

Das kombinierte Warenlager weist einen Einzelplatzlagerautomaten 10 auf, der im vorliegenden Fall dem Warenlagerautomaten entspricht, der in EP 1 407 984 B1 beschrieben ist. Der Einzelplatzlagerautomat enthält Ziehregale 11, die jeweils mehrere Einzelplätze 12 zum Lagern eines Gegenstandes aufweisen. Zu jeder Seite eines Ganges 14 ist eine Reihe von Ziehregalen 11 vorhanden. Jedes dieser Ziehregale 11 kann aus seiner Reihe heraus in den Gang 14 hineingezogen werden. In Längsrichtung des Ganges 14 ist die Transportvorrichtung 20 verfahrbar. Diese weist einen Transportschlitten 21 auf, an dem ein vertikal bewegbarer Vertikalschlitten 22 vorgesehen ist. Der Vertikalschlitten 22 trägt einen horizontal bewegbaren Horizontalschlitten 23 mit einem Manipulator 24, der einen in Längsrichtung des Ganges ausgerichteten Warenträger 25 enthält. Beim Betrieb wird der Horizontalschlitten 23 in eine bestimmte Horizontalposition gefahren, die der vertikalen Zielebene entspricht. Das Ziehregal 11 wird so weit in den Gang 14 hineingefahren, dass das anzusteuernde Regalfach sich ebenfalls in der vertikalen Zielebene im Gang befindet. Der Vertikalschlitten 22 wird vertikal verfahren, bis der Warenträger die Höhe des Regalfachs erreicht hat.

In einer Verlängerung des Ganges 14 befindet sich das Warenübergaberegal 26, das Fächer enthält, auf die der Manipulator 24 zugreifen kann. In die Fächer können Waren manuell eingegeben werden, die dann von dem Manipulator in die ausgewählten Einzelplätze transferiert werden. In einer Ebene oberhalb des Warenübergaberegals 26 befindet sich ein Ausgabeförderer 27, der Waren, die ihm von dem Manipulator 24 zugeführt werden, aus dem Einzelplatzlagerautomaten 10 herausführt und auf einen Förderer 37 überträgt.

Neben dem Einzelplatzlagerautomaten 10 ist ein Kanallagerautomat 30 angeordnet, dessen Einzelheiten EP 0 991 037 B1 entnommen werden können. Der Kanallagerautomat weist Schrägfachbodenregale 31 auf, deren schräge Fachböden durch Teiler in Kanäle 32 aufgeteilt sind. Die Kanäle 32 dienen der Aufnahme von Waren in einer Reihe. Jeder Kanal 32 fällt zur Frontseite 33 hin ab, während die Rückseite 34 die hochliegende Aufgabeseite darstellt.

An der Frontseite 33 befindet sich ein Freiraum 35, in dem ein erster Manipulator 36 bewegbar ist. Dieser ist im Stande, aus einem Kanal 32 den frontseitigen Gegenstand zu entnehmen, woraufhin die folgenden Gegenstände bis zu einem Anschlag nachrutschen. Der Manipulator 36 ist im Stande, den entnommenen Gegenstand an den Förderer 37 abzugeben.

An der Rückseite der Regale 31 befindet sich ein weiterer Freiraum 39, in dem ein zweiter Manipulator 38 bewegbar ist. Der Manipulator 38 dient der Einlagerung von Waren in den Kanallagerautomaten.

Der Einzelplatzlagerautomat 10 und der Kanallagerautomat 30 arbeiten mit einem gemeinsamen Warenannahmeautomaten 40 zusammen. Der Warenannahmeautomat ist im Einzelnen in DE 20 2006 013 956 U beschrieben. Er weist eine Eingabestelle 41 in Form eines Trichters auf, in die die einzulagernden Gegenstände ungeordnet eingeschüttet werden. Die Gegenstände werden dann in eine Reihe gebracht und vereinzelt. Die Gegenstände durchlaufen einzeln eine Vermessungsstation 45, in der die Abmessungen jedes Gegenstandes ermittelt werden, und einen Sensor 46, der eine Identifizierung, z. B. einen Barcode, auf den Gegenständen liest. Damit kann jeder einzelne Gegenstand identifiziert werden. Gegenstände, die nicht identifiziert werden können, werden ausgeworfen. Der Sensor kann ein Barcodeleser oder ein Transponder-Abfragesystem sein. Wenn der Gegenstand identifiziert ist, sind auch seine Abmessungen, die Nachfragehäufigkeit und andere Parameter bekannt. In Abhängigkeit hiervon entscheidet der Lagerverwaltungsrechner, ob der Gegenstand in den Einzelplatzlagerautomaten 10 oder den Kanallagerautomaten 30 eingegeben werden soll. Eine entsprechende Weiche 42 führt den Gegenstand in eine erste Position 43, in der er von dem Manipulator 24 des Einzelplatzlagerautomaten erreicht werden kann, oder in eine zweite Position 44, in der er von dem zweiten Manipulator 38 des Kanallagerautomaten 30 erreicht werden kann. Auf diese Weise wird der Gegenstand entweder in den Einzelplatzlagerautomaten oder den Kanallagerautomaten eingegeben und dort an dem vorgesehenen Einzelplatz oder in dem vorgesehenen Kanal gespeichert.

Der Lagerverwaltungsrechner führt die Verwaltung beider Lager durch. Er speichert die Lagerplätze bzw. Kanäle, an denen die Gegenstände gespeichert sind, und steuert nicht nur die Einlagerung von Waren, sondern auch die Warenausgabe. Aus dem Kanallagerautomaten 30 erfolgt die Warenausgabe durch den ersten Manipulator 36, der die Ware an den Förderer 37 abgibt. Bei dem Einzelplatzlagerautomaten 10 erfolgt die Warenabgabe durch ein Transportband 27, das zu dem Förderer 37 führt.

## Patentansprüche

1. Kombiniertes Warenlager mit einem Einzelplatzlagerautomaten (10), welcher für jeden gelagerten Gegenstand einen Einzelplatz (12) aufweist, und einem Kanallagerautomaten (30), bei welchem mehrere Gegenstände in einer Reihe in einem Kanal (32) angeordnet sind, und mit einem Warenannahmeautomaten (40), der eine Einschütt-Eingabevorrichtung (41) für Schüttwaren aufweist und ungeordnet eingegebene Gegenstände vereinzelt und identifiziert, zum Überführen der Gegenstände entweder zu dem Einzelplatzlagerautomaten (10) oder zu dem Kanallagerautomaten (30) in Abhängigkeit von einem Identifizierungsmerkmal.

2. Kombiniertes Warenlager nach Anspruch 1, **dadurch gekennzeichnet, dass** der Warenannahmeautomat eine Weiche (42) aufweist, die die Gegenstände entweder in eine erste Position (43) oder in eine zweite Position (44) führt, und dass die erste Position (43) von einem Manipulator (24) des Einzelplatzlagerautomaten (10) erreichbar ist und die zweite Position (44) von einem Manipulator (38) des Kanallagerautomaten (30).

3. Kombiniertes Warenlager nach Anspruch 1 oder 2, **dadurch gekennzeichnet, dass** der Kanallagerautomat (30) einen ersten Manipulator (36) aufweist, der zur Entnahme von Gegenständen entlang der Frontseite (33) der Kanäle (32) gesteuert bewegbar ist, um die Gegenstände aus dem Kanallagerautomaten auszugeben, und einen zweiten Manipulator (38), der zum Einlagern von Gegenständen entlang der Rückseite (34) der Kanäle (32) gesteuert bewegbar ist, und dass der zweite Manipulator (38) mit dem Warenannahmeautomaten (40) zusammenwirkt.

4. Kombiniertes Warenlager nach einem der Ansprüche 1 bis 3, **dadurch gekennzeichnet, dass** der Einzelplatzlagerautomat (10) einen Manipulator (24) aufweist, der von dem Warenannahmeautomaten (40) überführte Gegenstände in die Einzelplätze (12) einlagern und aus diesen entnehmen kann, um die Gegenstände aus dem Einzelplatzlagerautomaten (10) auszugeben.

5. Kombiniertes Warenlager nach einem der Ansprüche 1 bis 4, **dadurch gekennzeichnet, dass** der Warenannahmeautomat (40) von einem Sensor (46) gesteuert ist, der auf das Identifizierungsmerkmal reagiert.

6. Kombiniertes Warenlager nach einem der Ansprüche 1 bis 5, **dadurch gekennzeichnet, dass** der Einzelplatzlagerautomat (10) und der Kanallagerautomat (30) mit demselben Förderer (37) verbunden sind, um Gegenstände an diesen abzugeben.
